(19) Europäisches Patentamt
European Patent Office
Office européen des brevets

(11) **EP 4 322 075 A1**

(12) **EUROPEAN PATENT APPLICATION**

(43) Date of publication:
**14.02.2024 Bulletin 2024/07**

(21) Application number: **22189969.3**

(22) Date of filing: **11.08.2022**

(51) International Patent Classification (IPC):
**G06Q 10/04** $^{(2023.01)}$ **G06Q 50/30** $^{(2012.01)}$

(52) Cooperative Patent Classification (CPC):
**G06Q 10/04; G06Q 50/40;** G06Q 2240/00

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Hitachi, Ltd.**
**Tokyo 100-8280 (JP)**

(72) Inventors:
- **HARADA, Satoru**
  **London, EC2Y 5AJ (GB)**
- **WISETJINDAWAT, Wisinee**
  **London, EC2Y 5AJ (GB)**

(74) Representative: **Mewburn Ellis LLP**
**Aurora Building**
**Counterslip**
**Bristol BS1 6BX (GB)**

(54) **PASSENGER DESTINATION ESTIMATION SYSTEM**

(57) A passenger destination estimation system configured to estimate, from a total number of passengers within a mass transit network, a number of passengers exiting the mass transit network at a given stop of the mass transit network. The system comprises a passenger count unit configured to: obtain a number of passengers arriving at each of a plurality of stops preceding the given stop on one or more routes of the mass transit network; and calculate an unallocated-exit passenger number, which indicates a number of passengers whose exit stop in the mass transit network is unallocated, based on the number of passengers arriving at the plurality of preceding stops. The system further comprises a probability unit configured to: obtain, for each of the preceding stops, an origin-destination, OD, probability of a passenger arriving at that stop and exiting the network at the given stop; calculate a weighted probability of a passenger exiting the network at the given stop that is based on: the OD probability for each of the plurality of preceding stops, the unallocated-exit passenger number, and the number of passengers arriving at each of the plurality of preceding stops; and estimate the number of passengers exiting the network at the given stop based on the unallocated-exit passenger number and the weighted probability.

| | Number of passengers: | $N_1$ |
| S-1 | OD probability: | $P_{1 \to D}$ |
| S-2 | Number of passengers: | $N_2$ |
| | OD probability: | $P_{2 \to D}$ |
| S-3 | Number of passengers: | $N_3$ |
| | OD probability: | $P_{3 \to D}$ |
| S-D | Exiting passengers: | $NA_D$ |
| | Weighted probability: | $P'_{C \to D}$ |

Fig. 1

**Description**

*Field of the Invention*

The present invention relates to a passenger destination estimation system, a computer-implemented method for estimating destinations of passengers, and a non-transitory computer-readable storage medium.

*Background*

Mass transit networks, such as bus networks, train networks, tram networks, and combinations thereof comprise a plurality of stops at which passengers can enter and exit the network. Vehicles within the network transport passengers between stops, typically along fixed lines / routes. Computer systems can be used to estimate, for a given passenger, the stop at which they enter the network (their origin location) and the stop at which they exit the network (their destination location).

If the mass transit network uses a validation system (for example, a ticketing system) to allow passengers to enter and exit the mass transit network, then a computer system may be able to obtain the origin-destination (OD) information of passengers from their validation information. However, if OD information is not obtainable for some passengers within the network, then their destination may be estimated, often using the OD information from other passengers within the network to compute a probability of a passenger travelling from one stop to another.

However, there are several shortcomings with relying on passenger validation information to obtain OD information about passengers to then use in estimating the destination of passengers. Firstly, OD information may not be obtainable from the validation information, for example, if tickets do not specify a destination, but instead allow the passenger to travel to a number of other stops, or anywhere, within the network, or if the validation system does not obtain OD information but merely validates that the passenger can be admitted into the network. Secondly, a mass transit network may not use a validation system, meaning that OD information cannot be obtained through a validation system. Moreover, even if OD information is obtainable for a sub-set of the total passengers in the network, relying on the OD information of this sub-set of passengers to estimate the destination of passengers whose OD information is not obtainable may result in inaccurate and unreliable estimations.

In particular, existing systems for estimating the number of passengers exiting the network at a given stop are unreliable where the number of passengers estimated to exit the network at that stop is small, because the signal-to-noise ratio at those stops with regard to the number of passengers exiting at that stop over time is low, and existing systems are prone to introducing rounding errors as a result of the low number of passengers traveling to that stop from a preceding stop.

The present invention has been devised in light of the above considerations.

*Summary of the Invention*

It is desired to provide a passenger destination estimation system for a mass transit network, and methods for estimating the destination of passengers within a mass transit network, that are able to provide improved estimations of the number of passengers exiting the mass transit network at a given stop even where the number of passengers predicted to exit the mass transit network at that stop is small.

In a first aspect there is provided a passenger destination estimation system configured to estimate, from a total number of passengers within a mass transit network, a number of passengers exiting the mass transit network at a given stop of the mass transit network. The system comprises a passenger count unit and a probability unit. The passenger count unit is configured to: obtain a number of passengers arriving at each of a plurality of stops preceding the given stop on one or more routes of the mass transit networks; and calculate an unallocated-exit passenger number, which indicates a number of passengers whose exit stop in the mass transit network is unallocated, based on the number of passengers arriving at the plurality of preceding stops. The probability unit is configured to: obtain, for each of the preceding stops, an origin-destination, OD, probability of a passenger arriving at that stop and exiting the network at the given stop; calculate a weighted probability of a passenger exiting the network at the given stop that is based on: the OD probabilities for each of the plurality of preceding stops, the unallocated exit passenger number, and the number of passengers arriving at each of the plurality of preceding stops; and estimate the number of passengers exiting the network at the given stop based on the unallocated-exit passenger number and the weighted probability.

Advantageously, such a system is able to accurately estimate a number of passengers exiting the network at a given stop, even when the estimated number of passengers exiting the network at that stop is small, because the system aggregates the unallocated-exit passengers over a plurality of preceding stops within the network and determines a weighted probability of them travelling to the given stop, as opposed to considering each possible combination of an origin stop and the given exit stop in isolation when estimating the number of passengers exiting the network at the given exit stop.

The above described passenger destination estimation system may have the passenger count unit configured to calculate the unallocated-exit passenger number, $N_C'$, according to the equation:

$$N'_c = \sum_{i=1}^{x} N_i$$

where there are $x$ preceding stops and where $N_i$ passengers arrive at preceding stop i. Additionally, the probability unit may be further configured to calculate the weighted probability $P'_{C \to D}$, of a passenger exiting the network at the given stop, D, according to the equation:

$$P'_{C \to D} = \sum_{i=1}^{x} \left( \frac{N_i}{N'_c} \times P_{i \to D} \right)$$

where the OD probability of a passenger arriving at stop i and exiting the network at the given stop, D, is $P_{i \to D}$. Thirdly, the probability unit may be further configured to estimate the number of passengers exiting the network at the given stop, $NA_D$, according to the equation:

$$NA_D = P'_{C \to D} \times N'_c$$

Advantageously, the passenger destination estimation system being configured to estimate the number of passengers exiting the network at a given stop using the above equations leads to the aggregation of unallocated-exit passengers in the estimation process and allows the number of passengers exiting the network at a given stop to be accurately estimated, even when the estimated number of passengers exiting the network at that stop is small.

In the passenger destination estimation system the passenger count unit may be further configured to: obtain ticket OD information for a group of passengers arriving at each of the preceding stops; and, for each of the plurality of preceding stops, separate the number of passengers arriving at that stop into a number of OD-allocated passengers and a number of unallocated passengers based on the availability of ticket OD information; and calculate the unallocated-exit passenger number as the sum of the number of unallocated-exit passengers arriving at each of the plurality of preceding stops. The probability unit of the passenger destination estimation system may also be further configured to: calculate the weighted probability such that it is further based on the number of OD-allocated passengers arriving at each of the plurality of preceding stops; and estimate the number of passengers exiting the network at the given stop such that it is further based on the number of OD-allocated passengers arriving at each of the plurality of preceding stops whose ticket OD information lists the given stop as the destination. Advantageously, by obtaining ticket OD information for a group of the passengers arriving at the preceding stops and making use of this OD information in subsequent calculations, the accuracy of the estimated number of passengers exiting the network at a given stop can be improved by reflecting the present ticket OD information in the estimation.

The passenger destination estimation system may further comprise a historical data unit. The historical data unit may be configured to obtain a historical probability of a passenger arriving at a preceding stop and exiting the network at the given stop; and send the historical probability to the probability unit. The probability unit may then obtain an OD probability for that preceding stop that is calculated based on the historical probability. The historical data unit may obtain a historical probability for each of the plurality of preceding stops. Advantageously, basing the OD probability on historical data obtained by the historical data unit is beneficial in reflecting the actual, historical, use of the mass transit network in the estimation of the number of passengers exiting the mass transit network at the stop, improving the accuracy of the estimation.

The passenger destination estimation system using historical probability data and ticket OD information may have the passenger count unit further configured to calculate the unallocated-exit passenger number, $N'_c$, according to the equation:

$$N'_c = \sum_{i=1}^{x} (N_i - NT_i)$$

where there are $x$ preceding stops, $N_i$ passengers arrive at preceding stop i, and ticket OD information is obtained for $NT_i$ OD-allocated passengers arriving at stop i. Additionally, the OD probability, $P_{i \to D}$, for a preceding stop, i, for which a historical probability, $p_{i \to D}$, of a passenger arriving at stop i and exiting the network at the given stop, D, is received may be taken as that historical probability, $p_{i \to D}$. Furthermore, the probability unit may be further configured to calculate the weighted probability $P'_{C \to D}$, of a passenger exiting the network at the given stop, D, according to the equation:

$$P'_{C \to D} = \sum_{i=1}^{x} \left( \frac{N_i - NT_i}{N'_c} \times P_{i \to D} \right)$$

and estimate the number of passengers exiting the network at the given stop, $NA_D$, according to the equation:

$$NA_D = P'_{C \to D} \times N'_C + \sum_{i=1}^{x} NT_{i \to D}$$

where the number of OD-allocated passengers arriving at preceding stop i whose ticket OD information lists the given stop, D, as the destination is $NT_{i \to D}$. Advantageously, the passenger destination estimation system being configured to estimate the number of passengers exiting the network at a given stop using the above equations leads to the aggregation of unallocated-exit passengers in the estimation process, takes into consideration the ticket OD information available, and makes use of data on the historical usage of the mass transit network, and thus allows the number of passengers exiting the network at a given stop to be accurately estimated, even when the estimated number of passengers exiting the network at that stop is small.

The passenger destination estimation system using historical probability data and ticket OD information may obtain an OD probability for a preceding stop that is an integrated probability of a passenger arriving at that stop and exiting the network at the given stop, the integrated probability being based on: the respective historical probability of that stop, the number of passengers arriving at that stop, the number of OD-allocated passengers arriving at that stop, and the number of OD-allocated passengers arriving at that stop whose ticket OD information lists the given stop as the destination stop. Advantageously, the passenger destination estimation system being configured to obtain an OD probability calculated based on the above factors is provided with a more accurate OD probability, and thus allows the number of passengers exiting the network at a given stop to be accurately estimated, even when the estimated number of passengers exiting the network at that stop is small.

The above described passenger destination estimation system may have the passenger count unit further configured to calculate the unallocated-exit passenger number, $N'_C$, according to the equation:

$$N'_C = \sum_{i=1}^{x} (N_i - NT_i)$$

where there are x preceding stops, $N_i$ passengers arrive at preceding stop i and ticket OD information is obtained for $NT_i$ OD-allocated passengers arriving at preceding stop i. Additionally, the OD probability, of a passenger arriving at stop i and exiting the network at the given stop, D, that is obtained by the probability unit may be calculated according to the equation:

$$P_{i \to D} = \frac{p_{i \to D} \times N_i - NT_{i \to D}}{N_i - NT_i}$$

where the number of OD-allocated passengers arriving at stop i whose ticket OD information lists the given stop, D, as the destination is $NT_{i \to D}$, and the respective historical probability for stop i is $p_{i \to D}$. Furthermore, the probability unit may be further configured to calculate the weighted probability $P'_{C \to D}$, of a passenger exiting the network at the given stop, D, according to the equation:

$$P'_{C \to D} = \sum_{i=1}^{x} \left( \frac{N_i - NT_i}{N'_c} \times P_{i \to D} \right)$$

where the OD probability of a passenger arriving at stop i and exiting the network at the given stop, D, is $P_{i \to D}$; and to estimate the number of passengers exiting the network at the given stop, $NA_D$, according to the equation:

$$NA_D = P'_{C \to D} \times N'_c + \sum_{i=1}^{x} NT_{i \to D}$$

where the number of OD-allocated passengers arriving at stop i whose ticket OD information lists the given stop, D, as the destination is $NT_{i \to D}$. Advantageously, the passenger destination estimation system being configured to estimate the number of passengers exiting the network at a given stop using the above equations leads to the aggregation of unallocated-exit passengers in the estimation process, takes into consideration the ticket OD information available, and makes use of data on the actual, historical, use of the mass transit network, and thus allows the number of passengers exiting the network at a given stop to be accurately estimated, even when the estimated number of passengers exiting the network at that stop is small.

In a second aspect there is provided a computer-implemented method of estimating, from a total number of passengers within a mass transit network, a number of passengers exiting the mass transit network at a given stop of the mass transit network. The method comprises a passenger count unit: obtaining a number of passengers arriving at each of the plurality of stops preceding the given stop on one or more routes of the mass transit network; and calculating an unallocated-exit passenger number, which indicates a number of passengers whose exit stop in the mass transit network is unallocated, based on the number of passengers arriving at the plurality of preceding stops. The method further comprises a probability unit: obtaining, for each of the preceding stops, an origin-destination, OD, probability of a passenger arriving at that stop and exiting the network at the given stop; calculating a weighted probability of a passenger exiting the network at the given stop based on: the OD probabilities for each of the plurality of preceding stops, the unallocated-exit passenger number, and the number of passengers arriving at each of the plurality of preceding stops; and estimating the number of passengers exiting the network at the given stop based on the unallocated-exit passenger number and the weighted probability.

Advantageously, such a method is able to accurately estimate a number of passengers exiting the network at a given stop, even when the estimated number of passengers exiting the network at that stop is small, because the method aggregates the unallocated-exit passengers over a plurality of preceding stops within the network and determines a weighted probability of them travelling to the given stop, as opposed to considering each possible combination of an origin stop and the given exit stop in isolation when estimating the number of passengers exiting the network at the given exit stop.

The computer implemented method may further comprise the steps of the passenger counting unit: obtaining ticket OD information for passengers arriving at each of the preceding stops; and separating, for each of the plurality of preceding stops, the number of passengers arriving at that stop into a number of OD-allocated passengers and a number of unallocated-exit passengers based on the availability of ticket OD information. Within this method, the unallocated-exit passenger number may be the sum of the number of unallocated exit passengers arriving at each of the plurality of preceding stops; the weighted probability may further depend on the number of OD-allocated passengers arriving at each of the plurality of preceding stops; and the estimated number of passengers exiting the network may be further based on the number of OD-allocated passengers arriving at each of the plurality of preceding stops whose ticket OD information lists the given stop as the destination. Advantageously, by obtaining ticket OD information for a group of the passengers arriving at the preceding stops and making use of this OD information in subsequent calculations, the accuracy of the estimated number of passengers exiting the network at a given stop can be improved by reflecting the present ticket OD information in the estimation.

The computer-implemented method may further comprise the steps of a historical data unit obtaining, for a preceding stop, a historical probability of a passenger arriving at that stop and exiting the network at the given stop and sending the historical probability to the probability unit; and the probability unit obtaining the OD probability for that stop by a calculation based on the historical probability. The historical data unit may obtain a historical probability for each of the plurality of preceding stops. Advantageously, basing the OD probability on historical data obtained by the historical data unit is beneficial in reflecting the actual, historical, use of the mass transit network in the estimation of the number of passengers exiting the mass transit network at the stop, improving the accuracy of the estimation.

Where the computer-implemented method uses historical probability data and ticket OD information, the OD probability for a preceding stop obtained by the probability unit may be an integrated probability of a passenger arriving at that stop and exiting the network at the given stop and may be based on: the respective historical probability of that stop; the number of passengers arriving at that stop; the number of OD-allocated passengers arriving at that stop; and the number of OD-allocated passengers arriving at that stop whose ticket OD information lists the given stop as the destination. Advantageously, the passenger destination estimation system being configured to obtain an OD probability calculated based on the above factors is provided with a more accurate OD probability, and thus allows the number of passengers exiting the network at a given stop to be accurately estimated, even when the estimated number of passengers exiting the network at that stop is small.

The computer-implemented method may include any one, or any combination insofar as they are compatible, of the optional features set out with reference to the first aspect.

In a third aspect, there is provided a computer-implemented method of estimating, from a total number of passengers within a mass transit network, a number of passengers exiting the mass transit network at each stop, S, of a plurality of stops of the mass transit network, the method comprising the steps of: for each stop, S, of the plurality of stops: identifying a plurality of stops preceding stop S on one or more routes of the mass transit network (12); for each identified preceding stop, $S_{-i}$, to stop S: obtaining a number of passengers arriving at that preceding stop, $S_{-i}$, of the network; calculating an OD probability of a passenger arriving at that preceding stop, $S_{-i}$, and exiting the network at stop S; calculating an initial estimate of a number of passengers exiting the network at stop S having arrived at that preceding stop, $S_{-i}$, based on the product of the number of passengers arriving at that preceding stop, $S_{-i}$, and the OD probability of a passenger arriving at that preceding stop, $S_{-i}$, and exiting the network at stop S; flagging any stops, S, where an initial estimate of a number of passengers exiting the network at that stop, S, having arrived at preceding stop $S_{-i}$, is less than or equal to a threshold value, and: for any flagged stops, using an above-described computer-implemented method of estimating, from a total number of passengers within a mass transit network, a number of passengers exiting the mass transit network at a given stop of the mass transit network, to estimate the number of passengers exiting the mass transit network at those flagged stops; and for any unflagged stops, summing the initial estimates of the number of passengers exiting the network at that unflagged stop having arrived at a preceding stop over the preceding stops of the network, and taking the summation as the estimated number of passengers exiting the network at that unflagged stop.

Advantageously, such a method is able to efficiently and accurately estimate the number of passengers exiting the network at each stop of a plurality of stops, because where the number of passengers predicted to exit the network at a stop is large, the simple initial estimate which is fast and accurate when the estimated number of exiting passengers is large is used, whilst where the number of passengers predicted to exit the network at a stop is small, the more accurate, but also more complex method of the second aspect is used to provide the estimate.

For the above described method of estimating, from a total number of passengers within a mass transit network, a number of passengers exiting the mass transit network at each stop of a plurality of stops of the mass transit network, the threshold value may be set to one. Advantageously, this allows the speed and accuracy of the estimations to be suitably balanced against each other.

In a fourth aspect there is provided a system for implementing the method according to the third aspect.

In a fifth aspect there is provided a computer programme for executing a method according to the second aspect or third aspect.

In a sixth aspect there is provided a non-transitory computer-readable storage medium comprising the computer programme of the fifth aspect.

In a seventh aspect, there is provided a mass transit network manager, which includes the passenger destination estimation system of the first aspect, and is configured to modify one or more operational parameters of the mass transit network based on an estimated number of passengers exiting the mass transit network at a given stop as estimated by the passenger destination estimation system.

In any of the above described aspects, the mass transit network to which the system or method is applied may be a bus network, a train network, a tram network or a transit network comprising a combination of two or more types of transit including buses, trains and trams.

The estimated number of passengers exiting the mass transit network at a given stop by the passenger destination estimation system may be used for modifying one or more operation parameters or timetables of the mass transit network. For example, a bus timetable for transfers can be managed according to the number of passengers predicted to arrive at the station.

The estimate(s) of the number of passengers exiting the network at a given stop provided by one of the aspects may be passed onto a Mobility as a Service (MaaS) system such that the MaaS system can alter the configuration and/or operation of the transport network in accordance with the estimate(s). For example, timetables of the MaaS can be managed. This is advantageous in allowing the operation of the transit network to be made more efficient. Moreover, information relating to the predicted number of passengers to arrive at the station can be shared with external entities (e.g., taxi or ride share companies, or restaurants or shops.)

The invention includes the combination of the aspects and preferred features described except where such a combination is clearly impermissible or expressly avoided.

***Summary of the Figures***

Embodiments illustrating the principles of the invention will now be discussed with reference to the accompanying figures in which:

Figure 1 illustrates a mass transit network comprising a plurality of stops;

Figure 2 is a flowchart providing a method of operation for execution by a passenger destination estimation system to estimate, from a total number of passengers within a mass transit network, a number of passengers exiting the mass transit network at a given stop of the mass transit network;

Figure 3 is a modification of the flowchart in Figure 2, providing a method of operation for execution by a passenger destination estimation system to estimate, from a total number of passengers within a mass transit network, a number of passengers exiting the mass transit network at a given stop of the mass transit network;

Figure 4 is a modification of the flowchart in Figure 3, providing a method of operation for execution by a passenger destination estimation system to estimate, from a total number of passengers within a mass transit network, a number of passengers exiting the mass transit network at a given stop of the mass transit network;

Figures 5A and 5B are examples of data for use by the passenger destination estimation system in making its estimation;

Figure 6 illustrates a mass transit network comprising a plurality of stops;

Figure 7 is a flowchart providing a method of operation for execution by a passenger destination estimation system to estimate, from a total number of passengers within a mass transit network, a number of passengers exiting the mass transit network at each stop of a plurality of stops of the mass transit network;

Figure 8 illustrates a mass transit network comprising a plurality of stops; and

Figure 9 illustrates the structure of a passenger destination estimation system and associated units for estimating, from a total number of passengers within a mass transit network, a number of passengers exiting the mass transit network at a given stop of the mass transit network.

## Detailed Description of the Invention

Aspects and embodiments of the present invention will now be discussed with reference to the accompanying figures. Further aspects and embodiments will be apparent to those skilled in the art.

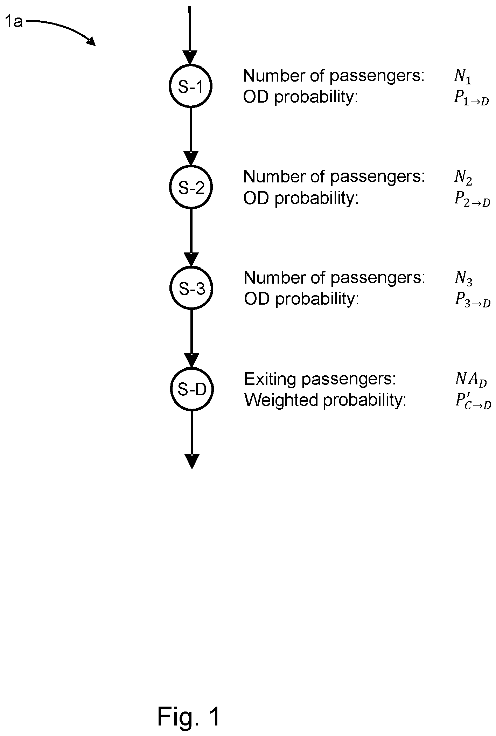

Figure 1 illustrates a mass transit network 1a comprising stops S-1, S-2, S-3, and S-D, connected linearly in sequence. Stop S-D is the given stop at which an estimate of the number of passengers exiting the mass transit network 1 is to be made by a passenger destination estimation system.

In Figure 1, the number of passengers arriving at each stop within a given timeframe is represented by $N_i$, where i is the stop in question. The number of passengers arriving at each stop includes the number of passengers that enter the mass transit network 1a at that stop and the number of passengers that arrive at that stop of the mass transit network on a vehicle of the mass transit network 1a (e.g. a train, bus, tram etc.).

A method of estimating the number of passengers that will exit the mass transport network 1a at a given stop, based on the number of passengers at preceding stops in the network 1a is as follows.

Firstly, for each preceding stop, i, to be considered, a number of passengers arriving at that stop, $N_i$ is obtained. The probability, of a passenger at that preceding stop, i, travelling to the given stop S-D and exiting the network 1a there, is also obtained, for example, from historical data on travelling patterns within the mass transport network 1a. An estimate of the number of passengers arriving at stop i then exiting the network at the given stop S-D is then taken as a product of the number of passengers arriving at stop i, $N_i$, and the probability $P_{i→D}$:

$$N_{i→D} = P_{i→D} \times N_i$$

To obtain the total number of passengers exiting the network 1a at stop S-D, $NA_D$, this calculation is summed over all the preceding stops being considered. In the case of the network in Figure 1, the calculation is:

$$NA_D = \sum_{i=1}^{3} (P_{i→D} \times N_i)$$

This method for estimating the number of passengers that will exit the mass transport network 1a at the given stop SD may be suitable where the number of passengers expected to exit the mass transit network at stop S-D is large. However, where the number of passengers estimated to exit the network at the given stop is small, this calculation becomes inaccurate. This is because the signal-to-noise ratio of the number of passengers exiting at such stop overtime is low, and the above-described calculation is prone to introducing rounding errors as a result of the low number of passengers traveling to that stop from a preceding stop. If 100 passengers arrive at stop S-1, but the probability $P_{1→D}$ is only 0.0015, then:

$$N_{1→D} = 0.15$$

Which equates to zero people travelling from stop S-1 to stop S-D, to the nearest whole person. If the figures are similar for stops S-2 and S-3, then the estimate of $NA_D$ will be zero to the nearest whole person.

The present invention provides a passenger destination estimation system for a mass transit network and methods of estimating the destination of passengers within a mass transit network that are able to address this problem.

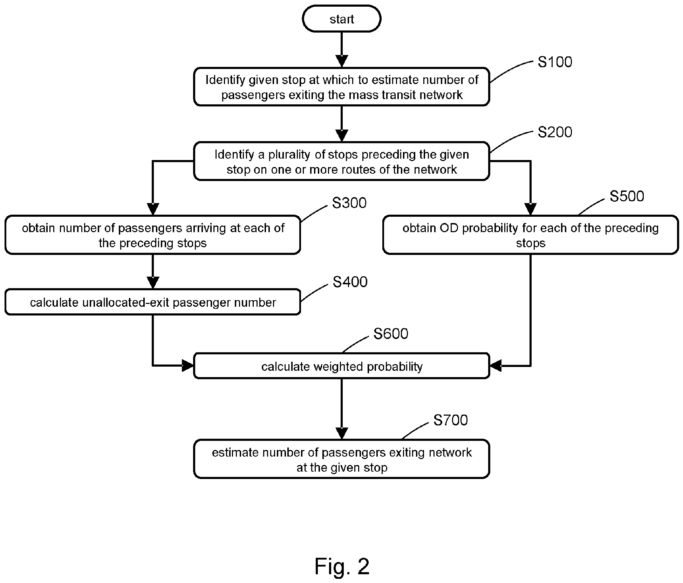

The method of operation of the present passenger destination estimation system will firstly be explained with reference to the mass transit network 1a of Figure 1 and the method set out in the flowchart of Figure 2.

At step S100 of Figure 2, the given stop of the mass transit network 1a of Figure 1 for which an estimate of the number of passengers exiting the mass transit network 1a at that stop is to be made is identified: stop S-D.

Subsequently, at step S200, a plurality of preceding stops of the mass transit network 1a to the given stop, S-D, are identified: stops S-1, S-2 and S-3 of Figure 1, for example. The plurality of preceding stops identified at step S200 may, or may not, be all of the stops in the mass transit network 1a that precede the given stop. For example, if the passenger destination estimation system is only concerned with estimating the number of passengers that exit the mass transit network 1a at stop S-D having already arrived at stops S-2 and S-3, the plurality of preceding stops identified at step S200 may only include stops S-2 and S-3, with S-1 not being included amongst the plurality of preceding stops.

Having identified the preceding stops, a number of passengers arriving at each of the preceding stops is obtained at step S300. Passengers arriving at a preceding stop includes passengers that enter the mass transit network 1a at that stop and the number of passengers that arrive at that stop of the mass transit network on a vehicle of the mass transit network 1a (e.g. a train, bus, tram etc.). The number of passengers arriving at each of the preceding stops may be obtained for a certain time period during the running of the mass transit network 1a, for example, for a 5-minute time period.

Subsequently, at step S400 the system calculates an unallocated-exit passenger number which indicates a number of passengers within the mass transit network 1a, having arrived at one of the plurality of preceding stops, whose exit stop in the mass transit network 1a (i.e. the stop at which they are going to exit the mass transit network) is unallocated. The unallocated-exit passenger number is based on the number of passengers arriving at each of the preceding stops. For example, in the case of the method in Figure 2, the unallocated-exit passenger number, $N_C'$, can be calculated according to the equation:

$$N_c' = \sum_{i=1}^{x} N_i$$

where there are $x$ preceding stops in the plurality of preceding stops and where $N_i$ passengers arrive at preceding stop i.

Subsequent to step S200, at step S500 the system also obtains, for each preceding stop within the plurality of preceding stops, an origin-destination, OD, probability of a passenger arriving at that stop exiting the network 1a at the given stop. Step S500 may be conducted in parallel with steps S300 and S400, as illustrated in Figure 2, or may be conducted sequentially with steps S300 and S400, with step S500 coming before, between, or after steps S300 and S400.

Having calculated an unallocated-exit passenger number and obtained an OD probability for each proceeding stop of the plurality of preceding stops, the system proceeds to step S600, at which a weighted probability of a passenger exiting the network 1a at the given stop is calculated. The weighted probability is based on at least:

the OD probability for each of the plurality of preceding stops;
the unallocated-exit passenger number; and
the number of passengers arriving at each of the plurality of preceding stops.

In the case of the method in Figure 2, the weighted probability $P_{C \to D}'$, of a passenger exiting the network at the given stop, D, can be calculated according to the equation:

$$P_{C \to D}' = \sum_{i=1}^{x} \left( \frac{N_i}{N_C} \times P_{i \to D} \right)$$

where the OD probability of a passenger arriving at stop i and exiting the network 1a at the given stop, D, is $P_{i \to D}$.

Having calculated a weighted probability that combines the OD probabilities of each of the preceding stops, at step S700, the system then proceeds to estimate the number of passengers exiting the network 1a at the given stop based on the unallocated exit passenger number calculated at step S400 and the weighted probability calculated at step S600. In the case of the method in Figure 2, the estimated number of passengers exiting the network 1a at the given stop, $NA_D$, can be calculated according to the equation:

$$NA_D = P_{C \to D}' \times N_C'$$

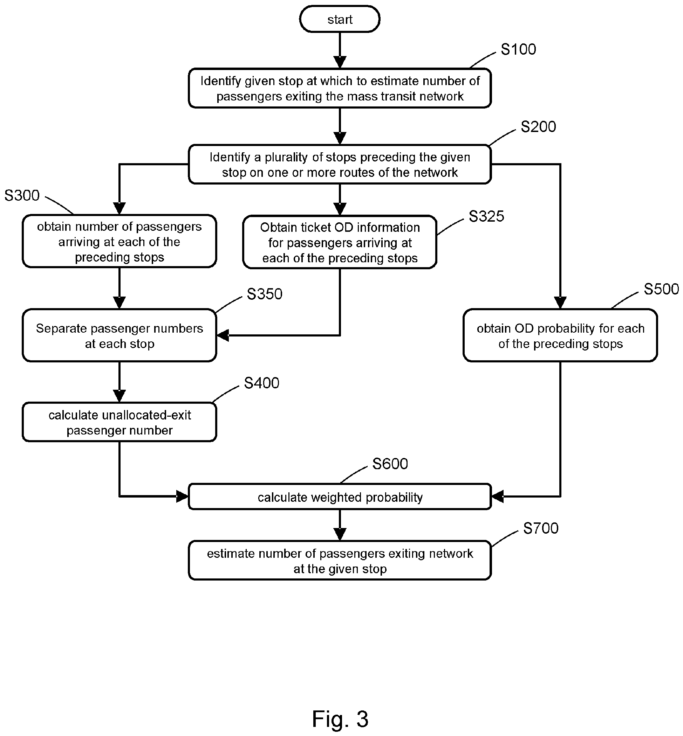

Figure 3 is a modification of the flowchart in Figure 2, providing a method of operation for execution by the passenger destination estimation system in order to estimate, from a total number of passengers within a mass transit network, a number of passengers exiting the mass transit network at a given stop of the mass transit network. Where Figure 3 shares features with Figure 2, like features are indicated by like reference numerals.

The method in Figure 3 is intended for operation with mass transit networks 1a where there is the possibility for passengers to obtain a ticket for the mass transit network 1a that indicates their origin in the network 1a and their destination in the network 1a (i.e. their exit stop), information about such tickets is referred to as ticket OD information.

The first modification to the operation of the passenger destination estimation system in Figure 3 is the introduction of step S325. At step S325, the system obtains ticket OD information for a group of passengers arriving at each of the preceding stops. A passenger may purchase a ticket for a specific trip through the network that specifies their origin and their destination, and the passenger destination estimation system may obtain such a passenger's ticket OD information. The ticket OD information for a passenger may be obtained in several ways, for example, if their ticket is logged on entry and/or exit of the mass transit network 1a, through tracking of the user via a mobile device associated with that ticket and user, or through other means (for example their OD information may be known prior to the estimation process running, that is stored in a database existing prior to instigation of the system). Not all passengers within the network 1a will necessarily have ticket OD information available for them - for example, passengers may purchase a ticket that does not specify an origin and destination, such as a ticket that permits travel between a range of origin and destination combinations. Alternatively, the network 1a may operate a ticketing system whereby the ticket is only purchased on exit of the network 1a. Accordingly, at each of the plurality of preceding stops, there may be a combination of passengers arriving, some of whom have ticket OD information available, so called OD-allocated passengers, and some of whom do not have ticket OD information available, so called unallocated passengers.

The second modification to the operation for the passenger destination estimation system in Figure 3 is the introduction of step S350. Having obtained ticket OD information for passengers arriving at each of the preceding stops, at step S350, for each of the plurality of preceding stops, the system separates the number of passengers arriving at that stop into a number of OD-allocated passengers and a number of unallocated passengers, based on the availability of ticket OD information.

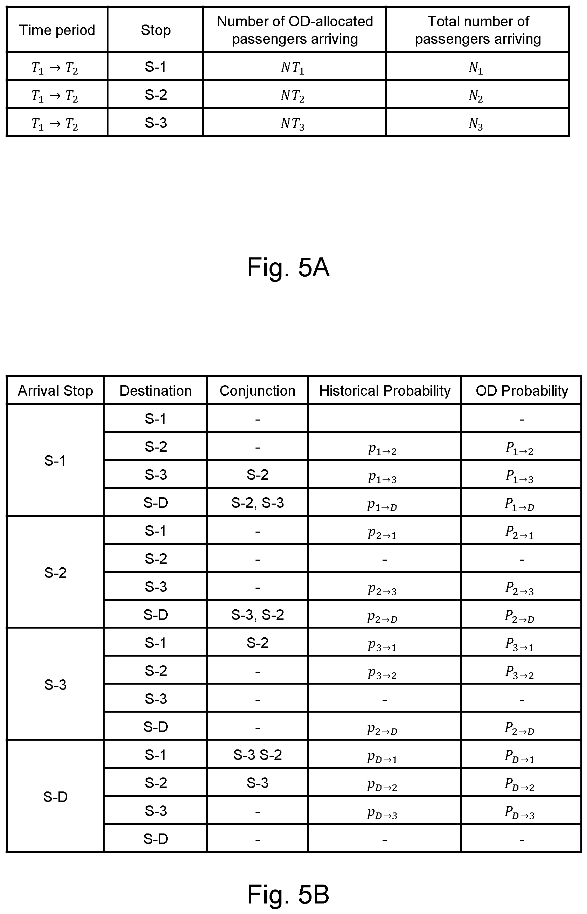

This separation of passengers into a number of OD-allocated passengers and a number of unallocated passengers can be further explained with reference to the data in Figure 5A. Figure 5A presents ticket OD information for passengers arriving at stops S-1, S-2 and S-3. For stop S-1, in the time period $T_1 \rightarrow T_2$, a total of $N_1$ passengers arrive at stop S-1, with $NT_1$ of those passengers being OD-allocated passengers (possibly being made up of passengers having a variety of origins and/or destinations). Accordingly, the number of unallocated passengers arriving at stop S-1 can be expressed as:

$$N_1 - NT_1$$

Turning back to Figure 3, having separated the number of passengers arriving at each stop into a number of OD-allocated passengers and a number of unallocated passengers, the system proceeds at step S400 to calculate the unallocated-exit passenger number. Since the system following the operation of Figure 3 may have additional information provided to it in comparison to a system following the operation of Figure 2, the calculation of the unallocated-exit passenger number can be refined, for example, the unallocated-exit passenger number may be calculated as the sum of the number of unallocated passengers arriving at each of the plurality of preceding stops. In the case of the method in Figure 2, for example, the unallocated-exit passenger number can be calculated according to the equation:

$$N_c' = \sum_{i=1}^{x} (N_i - NT_i)$$

where ticket OD information is obtained for $NT_i$ OD-allocated passengers arriving at stop i.

Step S325 may be conducted in parallel with steps S300, as illustrated in Figure 2, or may be conducted sequentially with steps S300 and S400, with step S325 coming before or after step S300. However, Step S325 must be conducted prior to step S350 in order to provide the ticket OD information necessary for step S350.

Where the system obtains ticket OD information for a group of passengers within the network, this information can also be used in refining the calculation of the weighted probability and the estimation of the number of passengers exiting the network 1 a at the given stop. As step S600, the weighted probability also be based on the number of OD-allocated passengers arriving at each of the plurality of preceding stops. Where this is the case, the weighted probability can, for example, be calculated according to the equation:

$$P_{C \rightarrow D}' = \sum_{i=1}^{x} \left( \frac{N_i - NT_i}{N_C'} \times P_{i \rightarrow D} \right)$$

in order to account for the number of passengers arriving at each of the plurality of preceding stops for whom ticket OD information is available.

Additionally, the ticket OD information obtained by the system for each of the plurality of preceding stops may also include the number of OD-allocated passengers whose ticket OD information lists the given stop as the destination. In such a case, this ticket OD information can be reflected in the estimation of the number of passengers exiting the network at the given stop, for example, by estimating the number of passengers exiting the network at the given stop according to the equation:

$$NA_D = P_{C \rightarrow D}' \times N_c' + \sum_{i=1}^{x} NT_{i \rightarrow D}$$

where $NT_{i \rightarrow D}$ is the number of OD allocated passengers arriving at preceding stop i whose ticket OD information lists the given stop, D, as the destination.

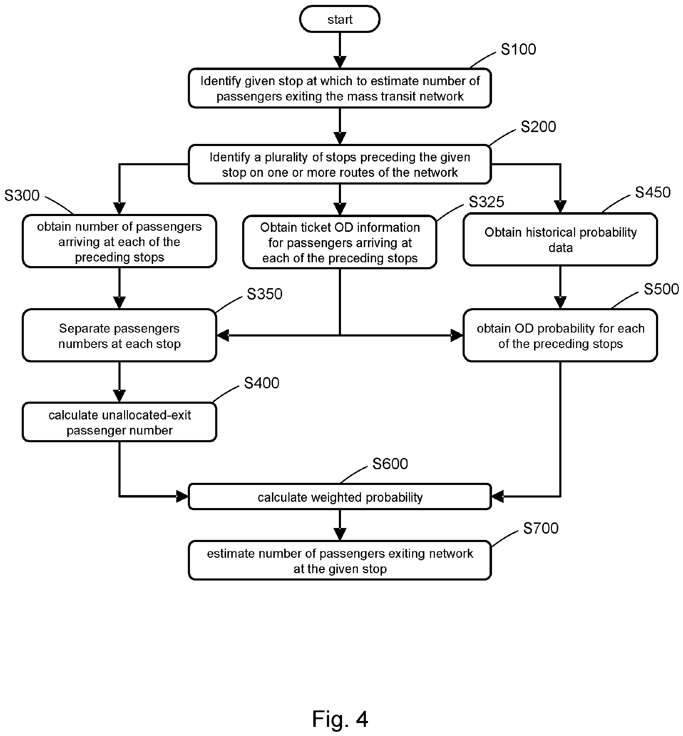

Figure 4 is a modification of the flowchart in Figure 3, providing a method of operation for execution by the passenger destination estimation system to estimate, from a total number of passengers within a mass transit network, a number of passengers exiting the mass transit network at a given stop of the mass transit network. Where Figure 4 shares features with Figure 3, like features are indicated by like reference numerals.

The first modification to the operation of the passenger destination estimation system in Figure 4 is the introduction of step S450 preceding step S500. At step S450, the system obtains historical probability data, the historical probability data including the probability of a passenger arriving at a preceding stop and exiting the network 1a at the given stop. The historical probability data may be obtained for every stop of the plurality of preceding stops, or just a subset of that plurality of preceding stops. The historical probability of a passenger arriving at a preceding stop and exiting the network 1a at the given stop is typically determined using a monitoring system for the mass transit network 1a that records the movement of passengers travelling through the network 1a.

The second modification to the operation of the passenger destination estimation system in Figure 4 is that the ticket OD information obtained at step S325 is provided for use in step S500 where the OD probability for each of the preceding stops is obtained.

Subsequently, the OD probabilities obtained at step S500 may be based on the additional information obtained by the system following the method of Figure 4 in comparison to a system following the method of Figure 2 or 3. One option is that the OD probability obtained at step S500 for a preceding stop is the historical probability of a passenger arriving at that preceding stop and exiting the network 1 a at the given stop. Alternatively, the OD probability obtained at step S500 for a preceding stop may be based on the respective historical probability of that stop, the number of passengers arriving at that stop, the number of OD allocated passengers arriving at that stop and the number of OD-allocated passengers arriving at that stop whose ticket OD information lists the given stop as the destination stop; in such a case, the OD probability of that stop may be calculated according to the equation:

$$P_{i \rightarrow D} = \frac{p_{i \rightarrow D} \times N_i - NT_{i \rightarrow D}}{N_i - NT_i}$$

By using the above equation for the OD probability, the historical data can be integrated with real-time ticket OD information obtained by the system, such that the accuracy of the OD probability is improved. Integrating the historical data and ticket OD information may be particularly beneficial where the network contains a stop where the passengers exiting the network 1a at that stop are disproportionately likely to be OD-allocated passengers in comparison to other stops within the network 1a. In contrast, a system that merely took the product of the number of unallocated passengers arriving at a given stop and the historical probability for that stop as the estimated number of passengers arriving at that stop and exiting the network at the given stop would provide a substantial overestimate in the same situation.

Figure 5B is a table illustrating the data that may be amassed by a system operating according to the flowchart in Figure 4. For each arrival stop, that is a stop of the network 1a at which passengers are arriving, possible destinations within the network 1a are listed, along with the conjunction necessary to arrive at that destination (i.e. which stops of the network the passenger would need to pass through to travel between the arrival stop and the destination). For each combination of arrival stop and destination, where those stops are not the same stop, a historical probability and an OD probability are obtained.

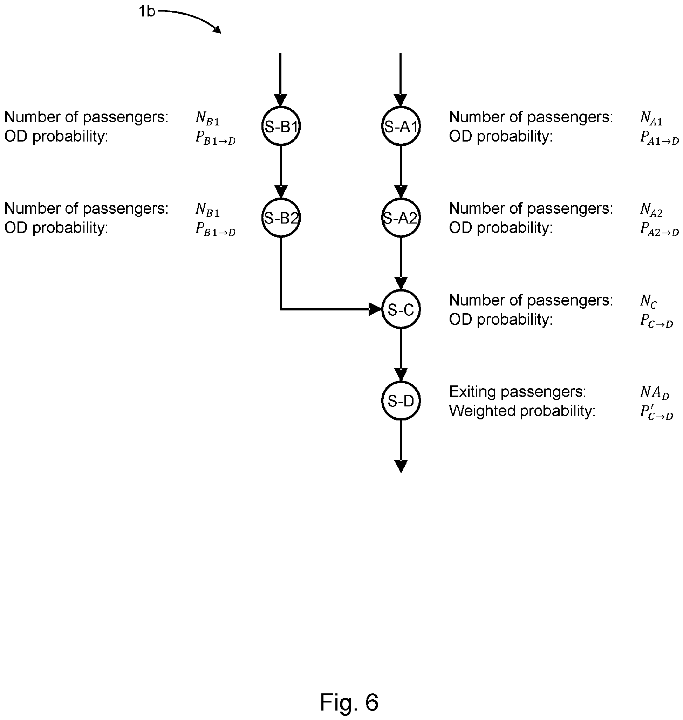

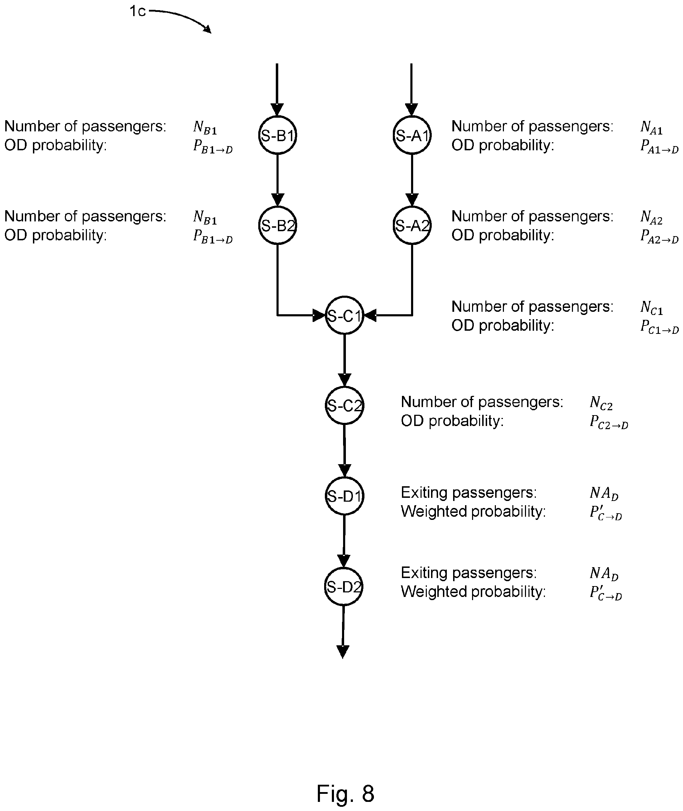

Figure 6 illustrates a mass transit network 1b comprising stops S-A1, S-A2, S-B1, S-B2, S-C and S-D. In contrast to the network 1a of Figure 1, the stops in the mass transit network 1b of Figure 8 are not all connected in series. Rather, stops S-A1 and S-A2 form branch A of a line, stops S-B1 and S-B2 form branch B of a line, and branches A and B converge at interchange stop S-C, from which the line then continues to stop S-D, which is the stop at which it is desired to estimate a number of passengers exiting the mass transit network 1b. The present passenger destination estimation system can provide an estimate of the number of passengers exiting the network 1b of Figure 6 at a given stop of that network 1b in the same way as it can for the stops of the network of Figure 1 by operating according to one of the methods of Figures 2 - 4.

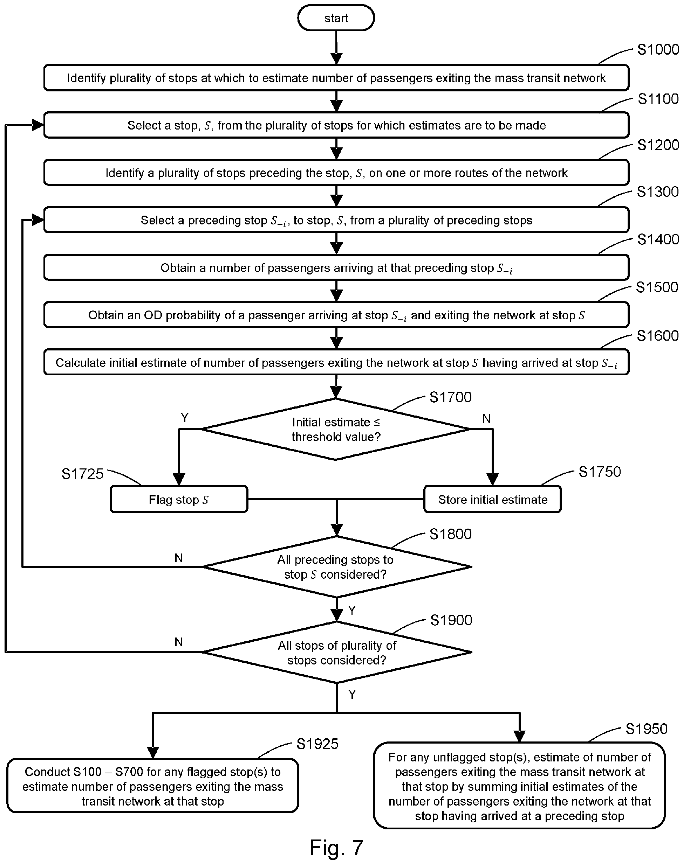

Figure 7 provides a sequence of operations for execution by the passenger destination estimation system in order to estimate, from a total number of passengers within a mass transit network 1, a number of passengers exiting the mass transit network 1 at each stop, S, of a plurality of stops of the mass transit network 1. It can be appreciated that the estimation conducted by the passenger destination estimation system when following the steps of the methods in Figures 2 - 4 is advantageous in improving the accuracy of the estimated number of passengers exiting the mass transit network at a given stop when the number of passengers exiting the network at that stop is small, because the system aggregates the unallocated-exit passengers over a plurality of preceding stops within the network. However, where the system is used to estimate the number of passengers exiting the mass transit network 1 at a stop for a plurality of stops within the network, repeating the above-described methods for every stop for which an estimate is to be made may be time consuming and computationally expensive. Accordingly, by the system operating in accordance with the method in Figure 7, the system can carry out the estimation process described above in relation to Figures 2 - 4 for stops in the network 1 where that is most beneficial, but can make use of a more efficient calculation for the remainder of the stops in the network 1 where the number of passengers exiting the mass transit network 1 is estimated to be large. The method of Figure 7 will be explained with reference to the mass transit network 1a of Figure 1.

At step S1000, a plurality of stops at which to estimate the number of passengers exiting the mass transit network 1 is identified. In figure 1, for example, the plurality of stops for which an to estimate the number of passengers exiting the network 1 includes stops S-3 and S-D.

At step S1100, a stop, S, is selected form the plurality of stops for which estimates are to be made by the system, i.e. step S-3 or S-D is selected.

At step S1200, a plurality of stops preceding the selected stop, S, on one or more route of the mass transfer network is identified. The plurality of preceding stops identified at step S1200 may, or may not, be all of the stops in the mass transit network 1a that precede stop S. For example, if the passenger destination estimation system is only concerned with estimating the number of passengers that exit the mass transit network 1a at stop S-D having arrived at stops S-2 and S-3, the plurality of preceding stops identified at step S200 may only include stops S-2 and S-3, with S-1 not being included amongst the plurality of preceding stops.

At step S1300, one of the preceding stops, $S_{-i}$, identified at step S1200 is selected for consideration. If stop S-D in Figure 1 is selected as stop S, for example, then one of steps S-1, S-2 and S-3 may be selected as the preceding stop $S_{-i}$.

At step S1400, the system obtains a number of passengers arriving at that preceding stop $S_{-i}$ in much the same way as step S300 in Figures 2 - 4. Passengers arriving at a preceding stop includes passengers that enter the mass transit network 1a at that stop and the number of passengers that arrive at that stop of the mass transit network on a vehicle of the mass transit network 1a (e.g. a train, bus, tram etc.). The number of passengers arriving at each of the preceding stops may be obtained for a certain time period during the running of the mass transit network 1a, for example, for a 5-minute time period.

At step S1500, the system obtains an OD probability of a passenger arriving at stop $S_{-i}$ exiting the network 1a at stop S. Step S1500 may be conducted in parallel with step S1400, or may be conducted in series with step S1400, coming either before or afterwards. As described above in relation to Figure 4, the OD probability obtained may be based on historical probability data.

Following the system obtaining a number of passengers arriving at preceding stop $S_{-i}$ and the OD probability of a passenger arriving at stop $S_{-i}$ exiting the network 1a at stop S, the system proceeds to step S1600 where an initial estimate of a number of passengers exiting the network at stop S having arrived at stop $S_{-i}$ is calculated based on the number of passenger arriving at stop $S_{-i}$ and the respective OD probability. This initial estimate may be calculated according to the equation:

$$NA_{S_{-i} \to S} = P_{S_{-i} \to S} \times N_{s_{-i}}$$

Where $NA_{S_{-i} \to S}$ is the initial estimate of a number of passengers exiting the network at stop S having arrived at stop $S_{-i}$, $P_{S_{-i} \to S}$ is the respective OD probability and $N_{s_{-i}}$ is the number of passengers arriving at stop $S_{-i}$.

Following the calculation of the initial estimate at step S1600, the initial estimate is compared to a threshold value set for the system at step S1700. The threshold value can be set, for example, to "1" and therefore for values less than 1 (e.g. 0.9 or so) the estimation can be improved in accuracy. Where the estimated number of passengers exiting the network at stop S having arrived at stop $S_{-i}$ is small, the initial estimate made according to steps S1400 - S1600 will be inaccurate in comparison to the estimation methods as described in relation to Figures 2 - 4. Accordingly, the initial estimate is compared to a threshold value at step S1700 so that the stops where the initial estimate is likely be less accurate (i.e. where the initial estimate is less than or equal to the threshold value) can be flagged (step S1725) and then one of the estimation methods as described in relation to Figures 2 - 4 can be applied to stop S to provide a more accurate estimate. If it is determined that the initial estimate is greater than the threshold value at step S1700, then the initial estimate is stored for later use at step S1750.

At step S1800, the system then checks whether all the identified preceding stops to stop S have been considered. If they have not, steps S1300 - S1800 are repeated for the remaining preceding stops. Subsequently, once all of the preceding stops to that stop S have been considered, at S1900 the system checks whether all the stops within the plurality of stops for which estimates are to be made have been considered. If they have not, steps S1100 - S1900 are repeated for the remaining stops for which an estimate is to be made.

Once the question at step S1900 has been answered affirmatively, the system proceeds to step S1925, where steps S100 - S700 (i.e. the estimation method as described in relation to one of the methods in Figures 2 - 4) is conducted for any flagged stop(s) in order to provide a more accurate estimate of the number of passengers exiting the mass transit network 1a at that stop. For any unflagged stop(s), the number of passengers exiting the mass transit network at that stop is estimated by summing the initial estimates of the number of passengers exiting that network at that stop having arrived at a preceding stop over the preceding stops to that stop identified at step S1200 of Figure 7, and taking that summation as the estimated number of passengers exiting the network at that unflagged stop.

Figure 8 illustrates a mass transit network 1c comprising stops S-A1, S-A2, S-B1, S-B2, S-C1, S-C2, S-D1 and S-D2. In contrast to the network 1a of Figure 1, the stops in the mass transit network 1c of Figure 8 are not all connected in series. Rather, stops S-A1 and S-A2 form branch A of a line, stops S-B1 and S-B2 form branch B of a line, and branches A and B converge at interchange stop S-C1, from which the line then continues to stops S-C2, S-D1 and S-D2, with stops S-D1 and S-D2 being the stops at which it is desired to estimate a number of passengers exiting the mass transit network 1c. The preceding stops to stop S-D2 in the network of Figure 8, for the purposes of the present passenger destination estimation system, may be taken as including all of stops S-A1, S-A2, S-B1, S-B2, S-C1, S-C2, S-D1, or may be taken a subset thereof, for example, S-A1, S-A2, S-B1, S-B2 and S-C1. The present passenger destination estimation system can provide an estimate of the number of passengers exiting the network 1c of Figure 8 at a given stop of that network 1c in the same way as it can for the stops of the network of Figure 1 by operating according to one of the methods of Figures 2 - 4.

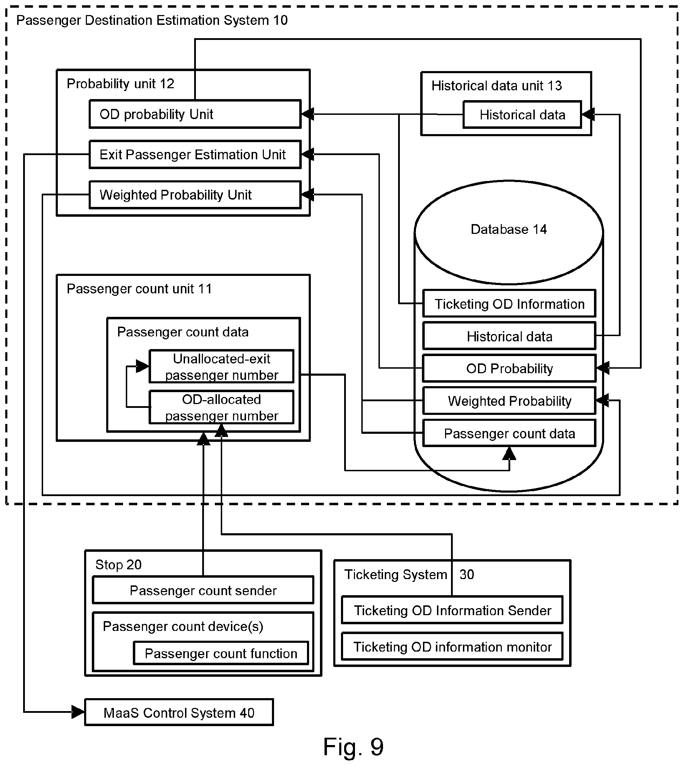

Figure 9 illustrates a passenger destination estimation system 10 which implements the methods discussed herein with reference to Figures 2 - 4 and the units that the estimation system 10 comprises.

The passenger destination estimation system 10 of Figure 9 comprises:

- a passenger count unit 11 configure to obtain a number of passengers arriving at each of a plurality of stops 20 preceding the given stop on one or more routes of the mass transit network 1, and calculate an unallocated-exit passenger number, which indicates a number of passengers whose exit stop 20 in the mass transit network 1 is unallocated, based on the number of passengers arriving at the plurality of preceding stops 20 (for example, by being configured to perform steps S300 and S400)

- a probability unit 12 configured to obtain, for each of the preceding stops 20, an origin-destination, OD, probability of a passenger arriving at that stop 20 and exiting the network at the given stop 20 (for example, by being configured to perform step S500), calculate a weighted probability of a passenger exiting the network 1 at the given stop that is based on: the OD probability for each of the plurality of preceding stops 20, the unallocated-exit passenger number, and the number of passengers arriving at each of the plurality of preceding stops (20) (for example, by being configure to perform step S600); and estimate the number of passengers exiting the network 1 at the given stop based on the unallocated-exit passenger number and the weighted probability (for example, by being configured to perform step S700).

- a historical data unit 13 configured to obtain a historical probability of a passenger arriving at a preceding stop 20 and exiting the network at the given stop (for example, by being configured to perform step S450), and send the historical probability to the probability unit (12); and

- a database 14 in communication with each of the passenger count unit 11, probability unit 12 and historical data unit 13 to store data and allow the other units of the system 10 to retrieve data.

Further to the units within the passenger destination estimation system 10, Figure 9 includes several other units external to the system 10 that the system 10 is in communication with. One or more stops 20 within the network 1 has a passenger count device(s) carrying out a passenger count function to determine the number of passengers arriving at that stop 20, which is then sent to the passenger count unit 11 by a passenger count sender at the stop. The passenger count devices may include cameras at the stop, passenger device detectors, ticket barriers and the like. A ticketing system 30 is also in communication with the passenger count unit 11 in order to provide the estimation system 10 with ticket OD information obtained by a ticketing OD information monitor, which is, for example, a computer system configured to monitor the usage of tickets within the mass transit network 1. Finally, Figure 9 includes a MaaS control system 40, to which the estimated number of passengers exiting the network at a given stop can be output. The MaaS system can then alter the configuration and/or operation of the transport network in accordance with the estimate(s) provided by the estimation system 10.

The passenger destination estimation system may be provided, for example, as one or more software packages running on one or more computers. For example, the passenger destination estimation system may be a server or plurality of distributed servers, on which software is operating which provides the various units discussed above. In some examples, the passenger destination estimation system includes a general processing unit, and it may be this general processing unit which performs steps S100 and S200.

The systems and methods of the above embodiments may be implemented in a computer system (in particular in computer hardware or in computer software) in addition to the structural components and user interactions described.

The term "computer system" includes the hardware, software and data storage devices for embodying a system or carrying out a method according to the above described embodiments. For example, a computer system may comprise a central processing unit (CPU), input means, output means and data storage. The computer system may have a monitor to provide a visual output display. The data storage may comprise RAM, disk drives or other computer readable media. The computer system may include a plurality of computing devices connected by a network and able to communicate with each other over that network.

The methods of the above embodiments may be provided as computer programs or as computer program products or computer readable media carrying a computer program which is arranged, when run on a computer, to perform the method(s) described above.

The term "computer readable media" includes, without limitation, any non-transitory medium or media which can be read and accessed directly by a computer or computer system. The media can include, but are not limited to, magnetic storage media such as floppy discs, hard disc storage media and magnetic tape; optical storage media such as optical discs or CD-ROMs; electrical storage media such as memory, including RAM, ROM and flash memory; and hybrids and combinations of the above such as magnetic/optical storage media.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

**Claims**

1.  A passenger destination estimation system (10) configured to estimate, from a total number of passengers within a mass transit network (1), a number of passengers exiting the mass transit network (1) at a given stop (20) of the mass transit network (1), the system (10) comprising:

    a passenger count unit (11) configured to:

    obtain a number of passengers arriving at each of a plurality of stops (20) preceding the given stop (20) on one or more routes of the mass transit network (1); and calculate an unallocated-exit passenger number, which indicates a number of passengers whose exit stop (20) in the mass transit network (1) is unallocated, based on the number of passengers arriving at the plurality of preceding stops (20); and

    a probability unit (12) configured to:

    obtain, for each of the preceding stops (20), an origin-destination, OD, probability of a passenger arriving at that stop (20) and exiting the network at the given stop (20); calculate a weighted probability of a passenger exiting the network (1) at the given stop (20) that is based on:

    the OD probability for each of the plurality of preceding stops (20), the unallocated-exit passenger number, and the number of passengers arriving at each of the plurality of preceding stops (20); and

    estimate the number of passengers exiting the network (1) at the given stop (20) based on the unallocated-exit passenger number and the weighted probability.

2.  The passenger destination estimation system (10) of claim 1, wherein:

    the passenger count unit (11) is further configured to:

    obtain ticket OD information for a group of passengers arriving at each of the preceding stops (20); for each of the plurality of preceding stops, separate the number of passengers arriving at that stop into a number of OD-allocated passengers and a number of unallocated passengers based on the availability of ticket OD information; and calculate the unallocated-exit passenger number as the sum of the number of unallocated passengers arriving at each of the plurality of preceding stops (20); and

    the probability unit (12) is further configured to:

    calculate the weighted probability such that it is further based on the number of OD-allocated passengers arriving at each of the plurality of preceding stops (20); and estimate the number of passengers exiting the network (1) at the given stop (20) such that it is further based on the number of OD-allocated passengers arriving at each of the plurality of preceding stops (20) whose ticket OD information lists the given stop (20) as the destination.

3. The passenger destination estimation system (10) according to any preceding claim, wherein:

the system (10) further comprises a historical data unit (13) configured to:

obtain a historical probability of a passenger arriving at a preceding stop (20) and exiting the network at the given stop (20); and send the historical probability to the probability unit (12); and

the OD probability for that preceding stop (20) obtained by the probability unit (12) is calculated based on the historical probability received from the historical data unit (13).

4. The passenger destination estimation system (10) of claim 3 as dependent on claim 2, wherein the OD probability for a preceding stop (20) obtained by the probability unit (12) is an integrated probability of a passenger arriving at that stop (20) and exiting the network (1) at the given stop (20) and is based on:

the respective historical probability of that stop (20);
the number of passengers arriving at that stop (20);
the number of OD-allocated passengers arriving at that stop (20); and
the number of OD-allocated passengers arriving at that stop (20) whose ticket OD information lists the given stop (20) as the destination stop (20).

5. The passenger destination estimation system (10) of claim 1, wherein:

the passenger count unit (11) is further configured to calculate the unallocated-exit passenger

number, $N_c'$, according to the equation:

$$N_c' = \sum_{i=1}^{x} N_i$$

where there are $x$ preceding stops (20) and where $N_i$ passengers arrive at preceding stop $i$;
the probability unit (12) is further configured to

calculate the weighted probability $P_{C \to D}'$, of a passenger exiting the network at the given stop, D, according to the equation:

$$P_{C \to D}' = \sum_{i=1}^{x} \left( \frac{N_i}{N_c'} \times P_{i \to D} \right)$$

where the OD probability of a passenger arriving at stop i and exiting the network (1) at the given stop, D, is $P_{i \to D}$; and
the probability unit (12) is further configured to estimate the number of passengers exiting the network (1) at the given stop, $NA_D$, according to the equation:

$$NA_D = P_{C \to D}' \times N_C'.$$

6. The passenger destination estimation system (10) of claim 3 as dependent on claim 2, wherein:

the passenger count unit (11) is further configured to calculate the unallocated-exit passenger

number, $N_c'$, according to the equation:

$$N_c' = \sum_{i=1}^{x} (N_i - NT_i)$$

where there are $x$ preceding stops (20), $N_i$ passengers arrive at preceding stop $i$, and ticket OD information is obtained for $NT_i$ OD-allocated passengers arriving at stop $i$;
the OD probability, $P_{i \to D}$, for a preceding stop, $i$, for which a historical probability, $p_{i \to D}$, of a passenger arriving at stop i and exiting the network at the given stop, D, is received is that historical probability, $p_{i \to D}$;
the probability unit (12) is further configured to

calculate the weighted probability $P_{C \to D}'$, of a passenger exiting the network (1) at the given stop, D, according to the equation:

$$P_{C \to D}' = \sum_{i=1}^{x} \left( \frac{N_i - NT_i}{N_c'} \times P_{i \to D} \right)$$

and
the probability unit (11) is further configured to estimate the number of passengers exiting the network (1) at the given stop, $NA_D$, according to the equation:

$$NA_D = P'_{C \to D} \times N'_c + \sum_{i=1}^{x} NT_{i \to D}$$

where the number of OD-allocated passengers arriving at preceding stop i whose ticket OD information lists the given stop, *D,* as the destination is $NT_{i \to D}$.

7. The passenger destination estimation system (10) of claim 4, wherein:

the passenger count unit (11) is further configured to calculate the unallocated-exit passenger number, $N'_c$ , according to the equation:

$$N'_c = \sum_{i=1}^{x} (N_i - NT_i)$$

where there are *x* preceding stops (20), $N_i$ passengers arrive at preceding stop i and ticket OD information is obtained for $NT_i$ OD-allocated passengers arriving at preceding stop *i*;
the OD probability, of a passenger arriving at stop i and exiting the network at the given stop, D, that is obtained by the probability unit (12) is calculated according to the equation:

$$P_{i \to D} = \frac{p_{i \to D} \times N_i - NT_{i \to D}}{N_i - NT_i}$$

where the number of OD-allocated passengers arriving at stop i whose ticket OD information lists the given stop, *D,* as the destination is $NT_{i \to D}$, and the respective historical probability for stop i is $p_{i \to D}$;
the probability unit is further configured to calculate the weighted probability $P'_{C \to D}$ , of a passenger exiting the network (1) at the given stop, D, according to the equation:

$$P'_{C \to D} = \sum_{i=1}^{x} \left( \frac{N_i - NT_i}{N'_c} \times P_{i \to D} \right)$$

where the OD probability of a passenger arriving at stop i and exiting the network (1) at the given stop, D, is $P_{i \to D}$; and
the probability unit (12) is further configured to estimate the number of passengers exiting the network (1) at the given stop, $NA_D$, according to the equation:

$$NA_D = P'_{C \to D} \times N'_c + \sum_{i=1}^{x} NT_{i \to D}$$

where the number of OD-allocated passengers arriving at stop i whose ticket OD information lists the given stop, *D,* as the destination is $NT_{i \to D}$.

8. A computer-implemented method of estimating, from a total number of passengers within a mass transit network (1), a number of passengers exiting the mass transit network (1) at a given stop of the mass transit network, the method comprising:

a passenger count unit (11):

obtaining a number of passengers arriving at each of the plurality of stops (20) preceding the given stop on one or more routes of the mass transit network (S300); and calculating an unallocated-exit passenger number (S400), which indicates a number of passengers whose exit stop (20) in the mass transit network (1) is unallocated, based on the number of passengers arriving at the plurality of preceding stops (20); and

a probability unit (12):

obtaining, for each of the preceding stops (20), an origin-destination, OD, probability of a passenger arriving at that stop (20) and exiting the network (1) at the given stop (S500);
calculating a weighted probability of a passenger exiting the network (1) at the given stop (S600) based on:

the OD probabilities for each of the plurality of preceding stops (20),
the unallocated-exit passenger number, and
the number of passengers arriving at each of the plurality of preceding stops (20); and

estimating the number of passengers exiting the network (1) at the given stop (S700) based on the unallocated-exit passenger number and the weighted probability.

9. The computer-implemented method of claim 8, the method further comprising the steps of:

the passenger counting unit (11):

obtaining ticket OD information for passengers arriving at each of the preceding stops (S325); and

separating, for each of the plurality of preceding stops (20), the number of passengers arriving at that stop (20) into a number of OD-allocated passengers and a number of unallocated-exit passengers (S350) based on the availability of ticket OD information; and

wherein:

the unallocated-exit passenger number is the sum of the number of unallocated exit passengers arriving at each of the plurality of preceding stops (20);

the weighted probability further depends on the number of OD-allocated passengers arriving at each of the plurality of preceding stops (20); and

the estimated number of passengers exiting the network (1) is further based on the number of OD-allocated passengers arriving at each of the plurality of preceding stops (20) whose ticket OD information lists the given stop (20) as the destination.

10. The computer-implemented method of claim 8 or 9, the method further comprising:

a historical data unit (13) obtaining, for a preceding stop (20), a historical probability of a passenger arriving at that stop (20) and exiting the network (1) at the given stop (20) and sending the historical probability to the probability unit (12) (S450); and

the probability unit (12) obtaining the OD probability for that stop (20) by a calculation based on the historical probability.

11. The computer-implemented method of claim 10 as dependent on claim 9, wherein the OD probability for a preceding stop (20) obtained by the probability unit (12) is an integrated probability of a passenger arriving at that stop (20) and exiting the network (1) at the given stop (20) and is based on:

the respective historical probability of that stop (20);

the number of passengers arriving at that stop (20);

the number of OD-allocated passengers arriving at that stop (20); and

the number of OD-allocated passengers arriving at that stop (20) whose ticket OD information lists the given stop (20) as the destination.

12. A computer-implemented method of estimating, from a total number of passengers within a mass transit network (1), a number of passengers exiting the mass transit network (1) at each stop, S, of a plurality of stops (20) of the mass transit network (1), the method comprising the steps of:

for each stop, S, of the plurality of stops (20):

identifying a plurality of stops preceding stop S on one or more routes of the mass transit network (12)

for each identified preceding stop, $S_{-i}$, to stop $S$:

obtaining a number of passengers arriving at that preceding stop, $S_{-i}$, of the network (S1400);

obtaining an OD probability of a passenger arriving at stop, $S_{-i}$, and exiting the network at stop S (S1500);

calculating an initial estimate of a number of passengers exiting the network at stop S having arrived at stop $S_{-i}$, based on the product of the number of passengers arriving at that preceding stop, $S_{-i}$, and the OD probability of a passenger arriving at that preceding stop, $S_{-i}$, and exiting the network at stop S (S1600);

flagging any stops, S, where an initial estimate of a number of passengers exiting the network at that stop, S, having arrived at preceding stop $S_{-i}$, is less than or equal to a threshold value (S1725); and

for any flagged stops, using the computer-implemented method of any of claims 8 - 11 to estimate the number of passengers exiting the mass transit network at those flagged stops (S1925); and

for any unflagged stops, summing the initial estimates of the number of passengers exiting the network at that unflagged stop having arrived at a preceding stop over the preceding stops of the network, and taking the summation as the estimated number of passengers exiting the network at that unflagged stop (S1950).

13. The method of claim 12, wherein the threshold value is one.

14. A computer programme for executing the method according to any one of claims 8 - 13.

15. A non-transitory computer-readable storage medium comprising the computer programme according to claim 14.

1a

| | Number of passengers: | $N_1$ |
|---|---|---|
| S-1 | OD probability: | $P_{1 \to D}$ |

| | Number of passengers: | $N_2$ |
|---|---|---|
| S-2 | OD probability: | $P_{2 \to D}$ |

| | Number of passengers: | $N_3$ |
|---|---|---|
| S-3 | OD probability: | $P_{3 \to D}$ |

| | Exiting passengers: | $NA_D$ |
|---|---|---|
| S-D | Weighted probability: | $P'_{C \to D}$ |

# Fig. 1

Fig. 2

start

Identify given stop at which to estimate number of
passengers exiting the mass transit network — S100

Identify a plurality of stops preceding the given
stop on one or more routes of the network — S200

S300 — obtain number of passengers
arriving at each of the
preceding stops

Obtain ticket OD information
for passengers arriving at
each of the preceding stops — S325

Separate passenger numbers
at each stop — S350

obtain OD probability for each
of the preceding stops — S500

calculate unallocated-exit
passenger number — S400

calculate weighted probability — S600

estimate number of passengers exiting network
at the given stop — S700

Fig. 3

start

Identify given stop at which to estimate number of
passengers exiting the mass transit network

S100

Identify a plurality of stops preceding the given
stop on one or more routes of the network

S200

S300

obtain number of passengers
arriving at each of the
preceding stops

Obtain ticket OD information
for passengers arriving at
each of the preceding stops

S325

Obtain historical probability
data

S450

Separate passengers
numbers at each stop

S350

obtain OD probability for each
of the preceding stops

S500

calculate unallocated-exit
passenger number

S400

calculate weighted probability

S600

estimate number of passengers exiting network
at the given stop

S700

Fig. 4

| Time period | Stop | Number of OD-allocated passengers arriving | Total number of passengers arriving |
|---|---|---|---|
| $T_1 \rightarrow T_2$ | S-1 | $NT_1$ | $N_1$ |
| $T_1 \rightarrow T_2$ | S-2 | $NT_2$ | $N_2$ |
| $T_1 \rightarrow T_2$ | S-3 | $NT_3$ | $N_3$ |

Fig. 5A

| Arrival Stop | Destination | Conjunction | Historical Probability | OD Probability |
|---|---|---|---|---|
| S-1 | S-1 | - | | - |
| | S-2 | - | $p_{1 \rightarrow 2}$ | $P_{1 \rightarrow 2}$ |
| | S-3 | S-2 | $p_{1 \rightarrow 3}$ | $P_{1 \rightarrow 3}$ |
| | S-D | S-2, S-3 | $p_{1 \rightarrow D}$ | $P_{1 \rightarrow D}$ |
| S-2 | S-1 | - | $p_{2 \rightarrow 1}$ | $P_{2 \rightarrow 1}$ |
| | S-2 | - | - | - |
| | S-3 | - | $p_{2 \rightarrow 3}$ | $P_{2 \rightarrow 3}$ |
| | S-D | S-3, S-2 | $p_{2 \rightarrow D}$ | $P_{2 \rightarrow D}$ |
| S-3 | S-1 | S-2 | $p_{3 \rightarrow 1}$ | $P_{3 \rightarrow 1}$ |
| | S-2 | - | $p_{3 \rightarrow 2}$ | $P_{3 \rightarrow 2}$ |
| | S-3 | - | - | - |
| | S-D | - | $p_{2 \rightarrow D}$ | $P_{2 \rightarrow D}$ |
| S-D | S-1 | S-3 S-2 | $p_{D \rightarrow 1}$ | $P_{D \rightarrow 1}$ |
| | S-2 | S-3 | $p_{D \rightarrow 2}$ | $P_{D \rightarrow 2}$ |
| | S-3 | - | $p_{D \rightarrow 3}$ | $P_{D \rightarrow 3}$ |
| | S-D | - | - | - |

Fig. 5B

Number of passengers:   $N_{B1}$
OD probability:   $P_{B1 \to D}$

Number of passengers:   $N_{A1}$
OD probability:   $P_{A1 \to D}$

Number of passengers:   $N_{B1}$
OD probability:   $P_{B1 \to D}$

Number of passengers:   $N_{A2}$
OD probability:   $P_{A2 \to D}$

Number of passengers:   $N_C$
OD probability:   $P_{C \to D}$

Exiting passengers:   $NA_D$
Weighted probability:   $P'_{C \to D}$

S-B1    S-A1

S-B2    S-A2

S-C

S-D

1b

## Fig. 6

start

Identify plurality of stops at which to estimate number of passengers exiting the mass transit network — S1000

Select a stop, $S$, from the plurality of stops for which estimates are to be made — S1100

Identify a plurality of stops preceding the stop, $S$, on one or more routes of the network — S1200

Select a preceding stop $S_{-i}$, to stop, $S$, from a plurality of preceding stops — S1300

Obtain a number of passengers arriving at that preceding stop $S_{-i}$ — S1400

Obtain an OD probability of a passenger arriving at stop $S_{-i}$ and exiting the network at stop $S$ — S1500

Calculate initial estimate of number of passengers exiting the network at stop $S$ having arrived at stop $S_{-i}$ — S1600

S1700
Initial estimate ≤ threshold value?
Y / N

S1725 — Flag stop $S$

S1750 — Store initial estimate

S1800
All preceding stops to stop $S$ considered?
N / Y

S1900
All stops of plurality of stops considered?
N / Y

S1925 — Conduct S100 – S700 for any flagged stop(s) to estimate number of passengers exiting the mass transit network at that stop

S1950 — For any unflagged stop(s), estimate of number of passengers exiting the mass transit network at that stop by summing initial estimates of the number of passengers exiting the network at that stop having arrived at a preceding stop

Fig. 7

Fig. 8

Passenger Destination Estimation System 10

Probability unit 12
OD probability Unit
Exit Passenger Estimation Unit
Weighted Probability Unit

Passenger count unit 11
Passenger count data
Unallocated-exit passenger number
OD-allocated passenger number

Historical data unit 13
Historical data

Database 14

Ticketing OD Information
Historical data
OD Probability
Weighted Probability
Passenger count data

Stop 20
Passenger count sender
Passenger count device(s)
Passenger count function

Ticketing System 30
Ticketing OD Information Sender
Ticketing OD information monitor

MaaS Control System 40

Fig. 9

Europäisches
Patentamt

European
Patent Office

Office européen
des brevets

# EUROPEAN SEARCH REPORT

**Application Number**

EP 22 18 9969

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/178044 A1 (WANG MENGJIAO [CN] ET AL) 22 June 2017 (2017-06-22)<br>* paragraph [0005] – paragraph [0006] *<br>* paragraph [0018] – paragraph [0019] *<br>* paragraph [0035] – paragraph [0039] *<br>* paragraph [0045] – paragraph [0051] *<br>* paragraph [0071] – paragraph [0080] *<br>————— | 1-15 | INV.<br>G06Q10/04<br><br>ADD.<br>G06Q50/30 |
| A | US 2013/317884 A1 (CHIDLOVSKII BORIS [FR]) 28 November 2013 (2013-11-28)<br>* paragraph [0027] – paragraph [0032] *<br>* paragraph [0037] – paragraph [0039] *<br>* paragraph [0049] – paragraph [0051] *<br>* paragraph [0096] – paragraph [0099] *<br>————— | 1-15 | |

**TECHNICAL FIELDS SEARCHED (IPC)**

G06Q

The present search report has been drawn up for all claims

| Place of search | Date of completion of the search | Examiner |
|---|---|---|
| Munich | 12 January 2023 | Reino, Bernardo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 9969

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2023

| Patent document cited in search report | Publication date | Patent family member(s) | Publication date |
|---|---|---|---|
| US 2017178044 A1 | 22-06-2017 | NONE | |
| US 2013317884 A1 | 28-11-2013 | EP 2667334 A1 | 27-11-2013 |
| | | US 2013317884 A1 | 28-11-2013 |

For more details about this annex : see Official Journal of the European Patent Office, No. 12/82

EPO FORM P0459